# EUROPEAN PATENT APPLICATION

(11) **EP 1 422 806 A2**
(43) Date of publication of application: **26.05.2004**
(21) Application number: 03257273.7
(22) Date of filing: 18.11.2003
(51) Int. Cl.: H02K 1/14, H02K 1/16

(54) **Electric motor**

(30) Priority: 19.11.2002 JP 2002335148; 08.07.2003 JP 2003271719
(71) Applicant: FANUC LTD, Minamitsuru-gun, Yamanashi 401-0597 (JP)
(72) Inventor: Sogabe, Masatoyo, Gotenba-shi Shizoka, 412-0043 (JP); Tamai, Takayuki, Fujiyoshida-shi Yamanashi, 403-0016 (JP)
(74) Representative: Billington, Lawrence Emlyn

(57) **Abstract**

An electric motor with a stator structure having a high thermal conductivity from coils (4) to a stator core (1), and capable of suppressing vibration of coils (4) and adjusting an output torque and a cogging amount of the motor. A stator core (1) is provided at its inner periphery with main teeth (2) extending radially and spaced at regular intervals from one another. Auxiliary teeth (8) are provided in slots formed between adjacent main teeth (2). Coils (4) are arranged such that, when wound around the main teeth (2), their outer peripheral faces are in close contact with the auxiliary teeth (8). Since the coils (4) are in contact at their central portions with the main teeth (2) and in close contact at their outer peripheral portions with the auxiliary teeth (8), heat generated from the energized coils (4) is efficiently conducted to the stator core (1), and removed by cooling devices provided at outer peripheral portions of the stator, thereby cooling the motor. Since the coils (4) are fixedly held between the main and auxiliary teeth (2, 8), vibration can be prevented. By adjusting the length of the auxiliary teeth (8), the output torque and the cogging amount can be adjusted.

## Description

### BACKGROUND OF THE INVENTION

### 1. Field of the Invention

The present invention relates to an electric motor, and more particularly to a stator core of the electric motor.

### 2. Description of Related Art

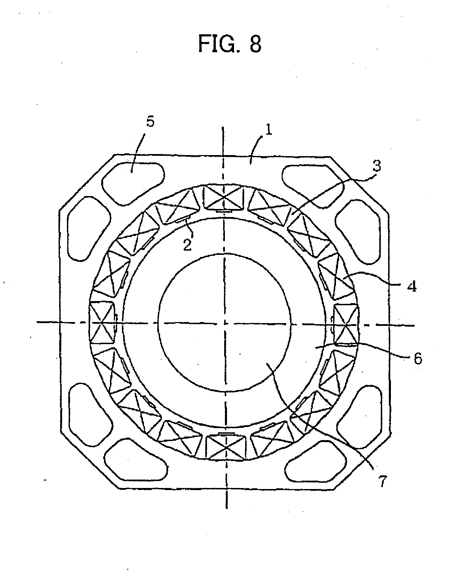

A stator core of an electric motor has teeth spaced from one another at regular intervals to form slots between adj acent teeth, and coils respectively formed around the teeth through the slots. FIG. 8 is a sectional view of an electric motor taken along a direction perpendicular to a rotor shaft. A stator core 1 has teeth 2 extending radially and spaced at regular intervals to form slots 3 between adjacent ones of the teeth 2, and a coil 4 is formed to be wound around each tooth 2. At the outer periphery of the stator core 1, there are provided cooling devices 5 such as holes through which heat medium for air-cooling, liquid-cooling, etc. flows. Reference numerals 6 and 7 denote a rotor and a rotor shaft, respectively.

To drive the electric motor, an electric current is caused to flow through the coils 4. Because of copper loss of the coils 4, heat generation occurs in the coils 4. The heat generated from the coils 4 is conducted to the teeth 2 and to the stator core 1, and then removed by means of the cooling devices 5 provided in the outer periphery of the stator, whereby the electric motor is cooled.

There is a gap between adjacent coils 4, and a thermally insulated state is formed by the air present in the gap. Thus, only to the teeth 2, the heat generated from the coils 4 can be conducted directly. To achieve a good thermal conduction, a method is adopted in which high thermal conductive resin is molded into the gap between the coils 4, whereby thermal conductivity is improved and at the same time vibration is suppressed.

As a method for achieving effective thermal conduction from the coils to the stator core, it is known to form inner faces of the stator core, i.e., bottom ends of the slots, so as to extend perpendicularly to side faces of the teeth, on each of which a bobbin holding a wound coil is fitted. With this arrangement, the bobbins are in close contact with the side faces of the teeth and with the bottom ends of the slots, whereby the thermal conduction from the coils to the stator core is improved. Also known is an electric motor that is made compact in size by forming projections in the stator core, these projections projecting in the slots and having guide holes through which bolts extend for fixing the stator core and brackets attached to opposite ends of the stator core (see, JP-A-9-312943).

Heat generated from the coils wound around the teeth of the stator core is conducted mainly through the teeth to the stator core, and then removed by means of the cooling devices, whereby the electric motor is cooled. To improve the motor cooling efficiency, it is required to effectively conduct the heat generated in the coils to the stator core and to the cooling devices. As mentioned above, however, the coils are in contact solely with the teeth around which they are wound, and outer peripheral portions of the coils are surrounded by an air layer, so that they are in a thermally insulated state. That is, there is no member to connect the outer peripheral portions of the coils to the stator core. With this arrangement, heat conduction to the stator core is mainly made only through the teeth, resulting in a poor efficiency in heat conduction. Moreover, the coils wound around the teeth are supported by the stator core only at their central portions, and accordingly, electrical vibration takes place when the coils are energized. Such vibration can be suppressed to some extent by impregnation treatment or the like, but cannot be fully suppressed.

To obviate this, high thermal conductive resin may be molded in between the coils so as to improve the thermal conductivity and suppress vibration of the coils, but the resultant performance varies depending on characteristics of the resin used for molding.

### SUMMARY OF THE INVENTION

The present invention provides an electric motor having a high thermal conductivity from coils to a stator core and capable of suppressing vibration of the coils in operation. The present invention also provides an electric motor capable of increasing an output torque and/or reducing a cogging amount.

An electric motor of the present invention comprises: a stator core having main teeth and auxiliary teeth each formed in a slot between adjacent ones of the main teeth; and coils respectively formed around the main teeth with the auxiliary teeth intervening adjacent ones of the coils.

Each of the auxiliary teeth may have a shape such as to fill a gap between the adjacent ones of the coils to thereby improve thermal conductivity from the coils to the stator core and suppress vibration of the coils.

A torque and/or a cogging amount of the electric motor can be adjusted by setting of lengths of the auxiliary teeth, the lengths of the auxiliary teeth are set in dependence on higher priority to a high output torque or a low cogging amount in accordance with an intended use of the electric motor.

In order to obtain an electric motor having a large output torque, the lengths of the auxiliary teeth are set to be maximum values not greater than lengths of the main teeth and with which the electric motor has a cogging amount within an allowable amount.

In order to obtain an electric motor having a small cogging amount, the lengths of the auxiliary teeth are set to be values not greater than lengths of the main teeth and with which the electric motor has a minimum cogging amount.

The stator core may have a cylindrical shape to constitute a rotary motor, or a straight shape to constitute a linear motor.

With the above arrangement, heat generated in the coils is efficiently conducted to the stator core for heat removal, whereby efficient motor cooling can be achieved. Vibration of the coils which would occur when they are energized can be also suppressed. In addition, the auxiliary teeth can be adjusted to the desired length such as to either increase the motor output torque or decrease the amount of cogging, whichever is appropriate, whereby the output torque and amount of cogging can be adjusted in accordance with the purpose of use of the motor.

### BRIEF DESCRIPTION OF THE DRAWINGS

FIG. 1 is an elevation view of a cylindrical stator core of an electric motor according to a first embodiment of this invention;
FIG. 2 is an enlarged view of the state core with coils wound around main teeth of the stator core;
FIG. 3a-3c are enlarged views of stator cores with auxiliary teeth of different lengths;
FIG. 4 is a graph showing relations between lengths of auxiliary teeth and an output torque of the motor and between the lengths of auxiliary teeth and a cogging amount of the motor;
FIG. 5 is a cross sectional view of the electric motor according to the first embodiment;
FIG. 6 is an enlarged view of a straight stator core used for a linear motor according to a second embodiment of the invention;
FIG. 7 is a enlarged view of the straight stator core with coils wound around main teeth; and
FIG. 8 is a cross sectional view of a conventional electric motor.

### DETAILED DESCRIPTION

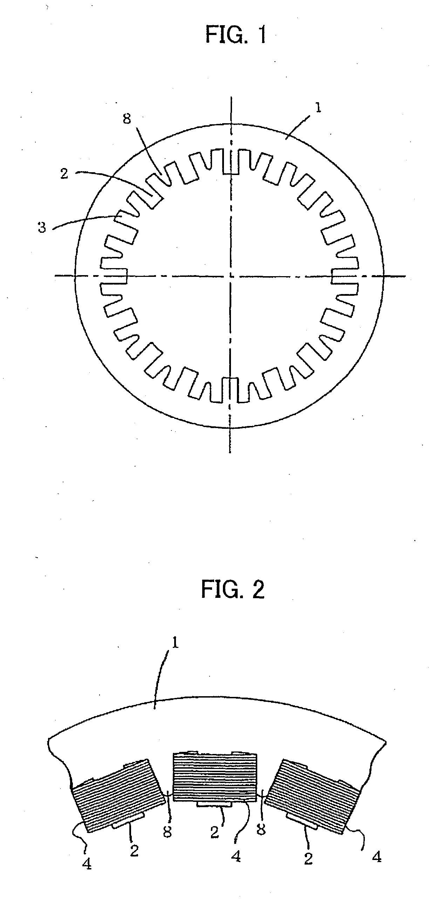

FIG. 1 is a view for explaining a cylindrical stator core 1 of an electric motor according to an embodiment of this invention, and FIG. 2 is a fragmentary enlarged view showing a state where coils 4 are wound around main teeth 2 of the stator core 1. The main teeth 2 are provided in the inner periphery of the cylindrical stator core 1 so as to extend radially and to be spaced at equal intervals from one another, and slots 3 are defined between adjacent main teeth 2. In the slots, auxiliary teeth 8 projecting from bottom ends of the slots 3 are provided. As shown in FIG. 2, each of the coils 4 is wound around a corresponding one main tooth 2, and arranged such that its outer peripheral face is in close contact with the auxiliary teeth 8 concerned. Specifically, the auxiliary tooth 8 is formed such that its projecting distal end has a width narrower than a width of a proximate portion thereof and such that a face of the auxiliary tooth 8 extends substantially in parallel to an opposite face of the main tooth 8 concerned.
As a result, the outer peripheral face of the coil 4 wound around the main tooth 2 is, as a whole, in contact with the faces of the auxiliary teeth 8. That is, the auxiliary tooth 8 serves to fill a gap between the coils 4 wound around the adjacent main teeth 2 and serves to divide these coils 4 from each other. It also has a function of making the coils 4 integral with the stator core 1.

Heat generated from the coils 4 is effectively conducted to the stator core 1 through the main teeth 2 and the auxiliary teeth 8, and removed by cooing devices provided in outer peripheral portions of the stator. The coils 4 are each fixed from both sides by the main tooth 2 and the auxiliary teeth 8, thus suppressing electrical vibration of the coils which would occur when the coils are energized.

In addition, by changing the length (length in the radial direction) of the auxiliary teeth 8, the motor output torque can be changed, and the amount of cogging can also be adjusted.

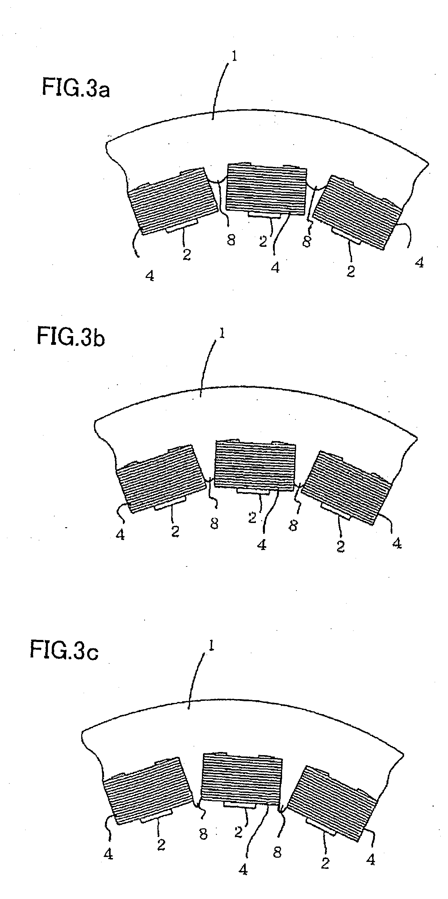

FIGS. 3a-3c are fragmentary enlarged sectional views of stators of electric motors that are different only in the length of auxiliary teeth 8 from one another. An electric motor in FIG. 3 a has auxiliary teeth 8 with a shorter length A, a motor in FIG. 3b has auxiliary teeth 8 with a middle length B determined so as to attain a minimum amount of cogging, and a motor in FIG. 3c has auxiliary teeth 8 with a longer length C.

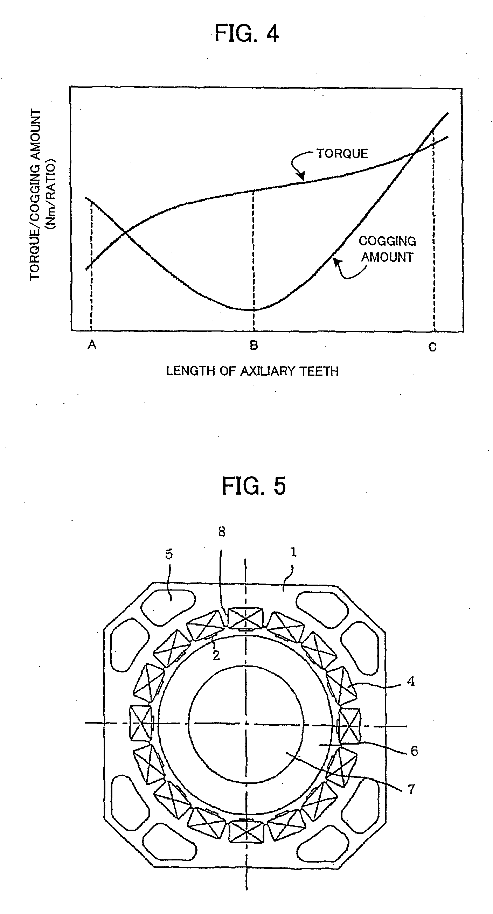

As for the just-mentioned electric motors constructed to have substantially the same construction except for the length of the auxiliary teeth 8, their output torques and amounts of cogging were measured. FIG. 4 shows measurement results. In FIG. 4, the length of auxiliary teeth 8 is taken along the abscissa, and the output torque and amount of cogging are taken along the ordinate. Meanwhile, the output torque and amount of cogging are shown not in absolute value but in relative value between the motors different from one another only in the length of the auxiliary teeth 8.

As shown in FIG. 4, the output torque increases with the increase in the length of the auxiliary teeth 8. On the other hand, the amount of cogging increases both at shorter lengths and longer lengths of the auxiliary teeth 8. This indicates that the amount of cogging decreases to a minimum at a given length of the auxiliary teeth 8. When the auxiliary teeth 8 has shorter length A as shown in FIG. 3a, the output torque is small and the amount of cogging is large. When the auxiliary teeth 8 have the larger length C as shown in FIG. 3c, both the output torque and amount of cogging are large. With the increase in length of the auxiliary teeth 8, the amount of cogging first gradually decreases, but then it starts to increase when the auxiliary teeth 8 becomes longer than a certain length. Thus, by setting the length of the auxiliary teeth 8 to the middle length B such that a minimum amount of cogging may be attained as shown in FIG. 3b, an optimum electric motor having such minimum amount of cogging can be obtained.

Accordingly, for an electric motor which places higher priority on the output torque and permits some amount of cogging in light of its purpose of use, the auxiliary teeth 8 may have the maximum length C not greater than the length of the main teeth 2 and at the same time the amount of cogging is within a allowable range. If the amount of cogging has to be reduced as small as possible, the auxiliary teeth 8 are set to have the length B not greater than lengths of the main teeth and with which the minimum cogging amount is attained.

FIG. 5 is a sectional view taken along the direction perpendicular to the rotor shaft for explaining the electric motor of the embodiment in which the aforementioned stator core is used. This motor differs from the conventional motor shown in FIG. 8 in that no substantial gap is present in the slots by the provision of the auxiliary teeth 8 each of which is disposed so as to fill a gap between adjacent coils 4, to divide the adjacent coils 4 from each other, and to be in close contact with these coils 4. In other respect, this motor in the same as the one shown in FIG. 8. The length of the auxiliary teeth 8 is adjusted depending on whether priority is given to increase the torque or to reduce the amount of cogging.

Each coil 4 is contact at its central portion with the main tooth 2 around which it is fitted, and is close contact at its outer peripheral portion with faces of the auxiliary teeth 8. Thus, the area of contact between the coil 4 and the stator core 1 is about twice or more as large as that in the conventional motor, thus greatly increasing the thermal conductivity from the coils 4 to the stator core 1. Heat conducted to the stator core 1 is removed by cooling devices 5 provided in outer peripheral portions of the stator core 1, whereby the motor is cooled efficiently.

At the inner peripheral portion of the stator core 1, respective gaps between the coils 4 are fully filled with the auxiliary teeth 8 so as to eliminate the gaps, so that the coils 4 cannot vibrate, thus positively suppressing electrical vibration of the coils.

As in the conventional motor, high thermal conductive resin may be molded into gaps, if any, in the slots, to improve the vibration suppression effect by further increasing the thermal conductivity.

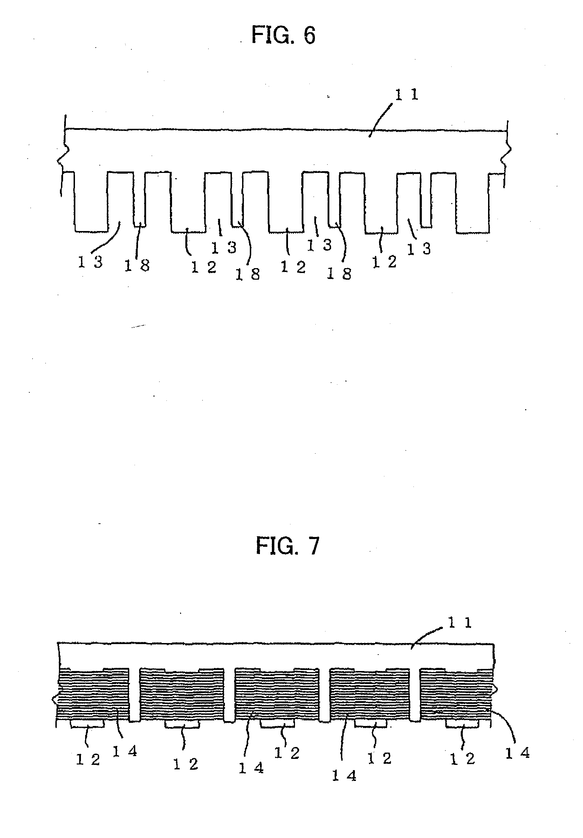

In the above embodiment, a case has been described in which the present invention is applied to a rotary motor. The present invention is also applicable to a linear motor. In FIGS. 6 and 7, a straight-line stator core is shown by way of example that is applied to a linear motor.

FIG. 6 is a view for explaining a straight-line stator core 11 applied to a linear motor according to an embodiment of this invention, and FIG. 7 is a view for explaining how coils 14 are wound around main teeth 12 of the stator core 11.

The stator core 11 is formed with the main teeth 12 that are spaced at equal intervals from one another, and is also formed with auxiliary teeth 18 provided in slots 13 defined between the main teeth 12. Opposite faces of the auxiliary teeth 18 and the main teeth 12 extend in parallel to one another. The auxiliary teeth 18 have a width such that their faces are in close contact with outer peripheral faces of the coils 14 individually wound around the main teeth 12, as shown in FIG. 7. Also in the straight-line stator core 11, the length of the auxiliary teeth 18 may be adjusted to thereby adjust the output torque and amount of cogging, as in the first embodiment. That is, the auxiliary teeth 18 may have a longer length, giving the priority to increase the output torque and permitting some increase in the amount of cogging, or may have a shorter length, giving the priority to reduce the amount of cogging, for instance.

Also in the straight-line stator core 11, each coil 14 is contact at its central portion with the main tooth 12 around which the coil 14 is fitted, and is close contact at its outer peripheral portion with faces of the auxiliary teeth 18. Thus, the area of contact between the coil 14 and the stator core 11 is about twice or more as large as that in the conventional linear motor, thus increasing the thermal conductivity from the coil 14 to the stator core 11. Heat conducted to the stator core 11 is removed by cooling devices, not shown, whereby the motor is cooled efficiently. As shown in FIG. 7, the coils 14 are each held between the main tooth 12 and the auxiliary teeth 18 to be integral therewith, thus suppressing electrical vibration of the coils 14 when electric current flows therethrough to drive the motor.

In the stator core 11 which constitutes the linear motor, high thermal conductive resin may be molded into gaps, if any, in the slots, to further improve the vibration suppression effect by further increasing the thermal conductivity, as in the rotary motor.

## Claims

1. An electric motor comprising:
a stator core having main teeth and auxiliary teeth each formed in a slot between adjacent ones of the main teeth; and
coils respectively formed around said main teeth with said auxiliary teeth intervening adjacent ones of said coils.

2. An electric motor according to claim 1, wherein each of said auxiliary teeth has a shape such as to fill a gap between the adjacent ones of said coils.

3. An electric motor according to claim 1, wherein a torque and/or a cogging amount of the electric motor are adjusted by setting of lengths of said auxiliary teeth.

4. An electric motor according to claim 3, wherein lengths of said auxiliary teeth are set to be maximum values not greater than lengths of said main teeth and with which the electric motor has a cogging amount within an allowable amount.

5. An electric motor according to claim 3, wherein lengths of said auxiliary teeth are set to be values not greater than lengths of said main teeth and with which the electric motor has a minimum cogging amount.

6. An electric motor according to claim 1, wherein said stator core has a cylindrical shape to constitute a rotary motor.

7. An electric motor according to claim 1, wherein said stator core has a straight shape to constitute a linear motor.
